# EUROPÄISCHE PATENTANMELDUNG

(11) **EP 3 547 283 A1**
(43) Veröffentlichungstag der Anmeldung: **02.10.2019**
(21) Anmeldenummer: 19157635.4
(22) Anmeldetag: 18.02.2019
(51) Int. Cl.: G08G 1/16, G08G 1/0965

(54) **UNTERSTÜTZUNG EINES HÖRGESCHÄDIGTEN FAHRZEUGFÜHRERS**

(30) Priorität: 20.03.2018 DE 102018204258
(71) Anmelder: ZF Friedrichshafen AG, 88046 Friedrichshafen (DE)
(72) Erfinder: Hanson, Lucas, 88045 Friedrichshafen (DE); Loi, Andrea, 97422 Schweinfurt (DE); Petrich, Anja, 88079 Kressbronn-Gohren (DE); Lovison, Debora, 88046 Friedrichshafen (DE); Fieres, Julian, 97422 Schweinfurt (DE); Ade, Florian, 88085 Langenargen (DE)

(57) **Zusammenfassung**

Auswerteeinrichtung (10) für ein Fahrzeug (1) zur Unterstützung eines hörgeschädigten Fahrzeugführers (2) umfassend eine Eingangsschnittstelle (11), um wenigstens ein Umgebungsgeräusch zu erhalten, wobei die Auswerteeinrichtung (10) ausgeführt ist, in Abhängigkeit des Umgebungsgeräusches wenigstens eine Position der Geräuschquelle relativ zu dem Fahrzeug (1) zu bestimmen, in Abhängigkeit einer Bewegung des Fahrzeuges (1) relativ zu der Geräuschquelle eine Gefahrensituation vorherzubestimmen, und für die Gefahrensituation ein Signal zu erzeugen, und eine erste Ausgangsschnittstelle (12), die ausgeführt ist, das Signal zur Wahrnehmung durch den hörgeschädigten Fahrzeugführer (2) auszugeben, um den Fahrzeugführer (2) für eine Reaktion auf die Gefahrensituation zu unterstützen. Ferner bezieht sich die Erfindung auf ein Unterstützungssystem (20), ein Verfahren und ein Computerprogrammprodukt (30) zur Unterstützung eines hörgeschädigten Fahrzeugführers (2).

## Beschreibung

Die Erfindung bezieht sich auf eine Auswerteeinrichtung für ein Fahrzeug zur Unterstützung eines hörgeschädigten Fahrzeugführers nach Anspruch 1. Ferner bezieht sich die Erfindung auf ein Unterstützungssystem für hörgeschädigte Fahrzeugführer nach Anspruch 8. Außerdem bezieht sich die Erfindung auf eine Verwendung des erfindungsgemäßen Unterstützungssystems nach Anspruch 10. Des Weiteren bezieht sich die Erfindung auf ein Verfahren zur Unterstützung eines hörgeschädigten Fahrzeugführers während einer Fahrt mit einem Fahrzeug nach Anspruch 11. Die Erfindung bezieht sich auch auf ein Computerprogrammprodukt zur Unterstützung eines hörgeschädigten Fahrzeugführers nach Anspruch 15.

Hörgeschädigte Menschen dürfen nicht ohne weiteres ein Fahrzeug, insbesondere ein Straßenfahrzeug, führen. Aufgrund der Hörschädigung besteht die Gefahr, dass Hörgeschädigte Umgebungsgeräusche, insbesondere verkehrsrelevante, mit Gefahrensituationen verbundene Umgebungsgeräusche, wie zum Beispiel Fahrzeughupen, Sondersignaltöne von Hilfs- und Rettungsfahrzeugen und Laute von nicht automobilen Verkehrsteilnehmern, nicht wahrnehmen. Folglich sind Hörgeschädigte in der Wahrnehmung von Gefahrensituationen im Straßenverkehr eingeschränkt.

Aus dem Stand der Technik sind zwar Hör-Hilfsmittel für schwerhörige Menschen, beispielsweise Hörgeräte, bekannt. Dennoch muss in Deutschland ein Gehörloser eine Bescheinigung vorlegen, zum Beispiel ein Gutachten eines Hals-Nasen-Ohrenarztes, die seine Verkehrssicherheit bestätigt, um einen Fahrzeugführerschein anzustreben. In anderen Ländern sind die Vorgaben einschränkender. Selbst wenn einem Hörgeschädigten eine Fahrerlaubnis erteilt wird, besteht die Gefahr, dass er nicht alle Umgebungsgeräusche wahrnimmt.

Der Erfindung hat die Aufgabe zugrunde gelegen, hörgeschädigte Fahrzeugführer in der Wahrnehmung von Umgebungsgeräuschen zu unterstützen, um auf Gefahrensituationen reagieren zu können.

Die Aufgabe wird gelöst von einer Auswerteeinrichtung für ein Fahrzeug zur Unterstützung eines hörgeschädigten Fahrzeugführers mit den Merkmalen des Anspruchs 1. Ferner wir die Aufgabe gelöst von einem Unterstützungssystem für hörgeschädigte Fahrzeugführer mit den Merkmalen des Anspruchs 8. Außerdem wir die Aufgabe gelöst mittels einer Verwendung des erfindungsgemäßen Unterstützungssystems gemäße Anspruch 10. Des Weiteren wird die Aufgabe gelöst durch ein Verfahren zur Unterstützung eines hörgeschädigten Fahrzeugführers während einer Fahrt mit einem Fahrzeug mit den Merkmalen des Anspruchs 11. Die Aufgabe wird auch gelöst mittels eines Computerprogrammproduktes zur Unterstützung eines hörgeschädigten Fahrzeugführers mit den Merkmalen des Anspruchs 15.

Weiterbildungen und vorteilhafte Ausgestaltungen sind in den Unteransprüchen angegeben.

Die erfindungsgemäße Auswerteeinrichtung für ein Fahrzeug zur Unterstützung eines hörgeschädigten Fahrzeugführers umfasst eine erste Eingangsschnittstelle, um wenigstens ein Umgebungsgeräusch zu erhalten. Die Auswerteeinrichtung ist ausgeführt, in Abhängigkeit des Umgebungsgeräusches wenigstens eine Position der Geräuschquelle relativ zu dem Fahrzeug zu bestimmen. Ferner ist die Auswerteeinrichtung ausgeführt, um in Abhängigkeit einer Bewegung des Fahrzeuges relativ zu der Geräuschquelle eine Gefahrensituation vorherzubestimmen und für die Gefahrensituation ein Signal zu erzeugen. Die Auswerteeinrichtung weist des Weiteren eine erste Ausgangsschnittstelle, die ausgeführt ist, das Signal zur Wahrnehmung durch den hörgeschädigten Fahrzeugführer auszugeben, um den Fahrzeugführer für eine Reaktion auf die Gefahrensituation zu unter-stützen.

Eine Auswerteeinrichtung ist eine Vorrichtung, die eingehende Informationen verarbeitet und ein aus dieser Verarbeitung resultierendes Ergebnis ausgibt. Insbesondere ist eine Auswerteeinrichtung eine elektronische Schaltung, wie z.B. eine zentrale Prozessoreinheit.

Fahrzeuge sind insbesondere Landfahrzeuge.

Hörschädigung bezeichnet eine Beeinträchtigung der akustischen Wahrnehmung durch einen Menschen. Hörschädigung umfasst die Beeinträchtigung in Bezug auf bestimmte Lautstärken, und die Beeinträchtigung in Bezug auf bestimmte Frequenzbereiche. Grade der Hörschädigung sind
- Schwerhörigkeit, das heißt ein Hörverlust bei einer Lautstärke von im Wesentlichen 50 Dezibel,
- Resthörigkeit, definiert über einen Hörverlust ab Lautstärken von im Wesentlichen 90 Dezibel und
- Gehörlosigkeit oder Taubheit, das heißt ein Hörverlust von Lautstärken von mehr als 120 Dezibel.

Eine Schnittstelle ist eine Einrichtung zwischen wenigstens zwei Funktionseinheiten, an der ein Austausch von logischen Größen, z.B. Daten oder physikalischen Größen, z.B. elektrischen Signalen erfolgt, entweder nur unidirektional oder bidirektional. Der Austausch kann analog oder digital erfolgen. Der Austausch kann ferner drahtgebunden oder drahtlos erfolgen.

Umgebungsgeräusche sind Geräusche aus einer Umgebung des Fahrzeuges. Verkehrsgeräusche, beispielsweise Fahrzeughupen, Sondersignaltöne von Hilfs- und Rettungsfahrzeugen und Laute von nicht automobilen Verkehrsteilnehmern, sind Verkehrsgeräusche. Geräusche sind wahrnehmbare Schallereignisse durch Menschen und/oder Sensoren, zum Beispiel Schallwandlern, insbesondere Mikrofonen. Die Umgebung des Fahrzeuges ist der Bereich des Raumes, innerhalb dem Objekte in dem Raum auf das Fahrzeug einwirken und den Zustand des Fahrzeuges beeinflussen können. Vereinfacht ist die Umgebung ein Kreis, dessen Mittelpunkt das Fahrzeug ist. Der Radius dieses Kreises ist abhängig von einer jeweiligen Situation.

Eine Gefahrensituation ist zum Beispiel ein Heranfahren eines Fahrzeuges auf einer Überholspur einer Autobahn auf das Fahrzeug des hörgeschädigten Fahrzeugführers. In dieser Situation sind typische Umgebungsgeräusche Hupgeräusche des heranfahrenden Fahrzeuges. Das Fahrzeug des hörgeschädigten Fahrzeugführers kann sich ebenfalls auf der Überholspur befinden, oder auf die Überholspur wechseln. Überwacht der hörgeschädigte Fahrzeugführer den Rückraum seines Fahrzeuges nicht visuell, erkennt er die Gefahrensituation eines Auffahrens des heranfahrenden Fahrzeuges nicht, weil er wegen seiner Hörschädigung die Hupgeräusche nicht hört. Die Auswerteeinrichtung erfasst aber das Hupgeräusch und wertet dieses hinsichtlich der Bewegung des Fahrzeuges des Hörgeschädigten relativ zu der Position des Hupgeräusches aus. Die Auswerteeinrichtung gibt ein Signal aus, das von dem Hörgeschädigten wahrnehmbar ist, um ihn auf die Gefahrensituation aufmerksam zu machen. Als Reaktion kann der Hörgeschädigte die Fahrbahnspur wechseln oder auf seiner Fahrspur weiterfahren. Damit wird die Gefahrensituation des Auffahrens vermieden. Gefahrensituationen sind nicht nur Situationen, in denen für den hörgeschädigten Fahrzeugführer eine Gefahr entsteht. Gefahrensituationen sind auch Situationen, in denen der hörgeschädigte Fahrzeugführer Gefahren für Dritte erzeugt.0

Mit der erfindungsgemäßen Auswerteeinrichtung werden nicht-visuell wahrnehmbare Informationen erfasst und ausgewertet. Diese Informationen, vorzugsweise fusioniert mit visuell wahrnehmbaren Informationen, verbessern die Wahrnehmung einer aktuellen Umgebung des Fahrzeuges. Dies ist insbesondere für hörgeschädigte Fahrzeugführer von Vorteil. Die Auswerteeinrichtung unterstützt den Hörgeschädigten in der akustischen Wahrnehmung. Ohne die Auswerteeinrichtung ist die akustische Wahrnehmung des Hörgeschädigten eingeschränkt.

Vorzugsweise ist die Auswerteeinrichtung ausgeführt, ein Computerprogramm auszuführen. Das Computerprogramm umfasst Softwarecodeabschnitte, um in Abhängigkeit des Umgebungsgeräusches wenigstens eine Position der Geräuschquelle relativ zu dem Fahrzeug zu bestimmen, um in Abhängigkeit einer Bewegung des Fahrzeuges relativ zu der Geräuschquelle eine Gefahrensituation vorherzubestimmen und um für die Gefahrensituation ein Signal zu erzeugen.

Software ist ein Sammelbegriff für Programme und zugehörigen Daten. Das Komplement zu Software ist Hardware. Hardware bezeichnet die mechanische und elektronische Ausrichtung eines Daten verarbeitenden Systems.

Gemäß einer bevorzugten Ausführung der Erfindung ist die erste Eingangsschnittstelle eine Schnittstelle zu wenigstens einem an dem Fahrzeug anordenbaren Mikrofon. Das heißt, die erste Eingangsschnittstelle ist eine Audioschnittstelle. Vorzugsweise ist die erste Eingangsschnittstelle eine Schnittstelle zu vier an dem Fahrzeug anordenbaren Mikrofonen, wobei besonders vorzugsweise ein erstes Mikrofon in einem vorderen Bereich des Fahrzeuges, ein zweites Mikrofon in einem hinteren Bereich des Fahrzeuges, ein drittes Mikrofon in einem ersten Seitenbereich des Fahrzeuges und ein viertes Mikrofon in einem zweiten Seitenbereich des Fahrzeuges anordenbar ist.

Die an das Fahrzeug anordenbare Mikrofone sind Mikrofone, die für automobile Anwendungen geeignet sind, das heißt insbesondere entsprechend witterungsbeständig und funktionssicher sind. Vorzugweise weisen diese Mikrofone Filter und/oder Verstärker auf, um für Umgebungsgeräusche sensitiv zu sein. Mit der Anordnung eines Mikrofons an jeder Seite des Fahrzeuges, also vorne, hinten, links und rechts, werden Umgebungsgeräusche vorteilhafterweise aus allen Richtungen relativ zu dem Fahrzeug erfasst. Bevorzugt sind die jeweiligen Mikrofone Richtmikrofone.

Vorzugsweise ist die erste Ausgangsschnittstelle eine Schnittstelle, vorzugsweise eine Benutzungsschnittstelle, die das Signal zur visuellen und/oder taktilen Wahrnehmung ausgibt.

Eine Benutzungsschnittstelle, im Englischen als human machine interface bezeichnet, ist die Stelle oder Handlung, mit der ein Mensch mit einer Maschine in Kontakt tritt. Im Fahrzeug sind Benutzungsschnittstellen insbesondere Armaturentafel, Mittelkonsole, Schalthebel, Lenkrad und/oder Fahrfußhebel. Die Windschutzscheibe kann auch zur Anzeige und damit visuellen Wahrnehmung von Informationen und folglich als Benutzungsschnittstelle verwendet werden. In der Regel wird der Bereich, durch den der Fahrzeugführer bei geradesaus Blicken durchsieht, für die Anzeige von Informationen verwendet, im Englischen als head up display bezeichnet. Denkbar ist auch, dass die gesamte Fläche der Windschutzscheibe als Benutzungsschnittstelle verwendet wird. Bevorzugt ist, dass zur Anzeige von Informationen Techniken der erweiterten Realität, im Englischen als augmented reality, verwendet werden.

Zum Beispiel wird mittels der ersten Ausgangsschnittstelle das von der Auswerteeinrichtung erfasste und ausgewertete Geräusch eines Martinhorns eines heranfahrenden Feuerwehrfahrzeuges visuell als rotes, kreisendes Blinklicht, vorzugsweise mit einem Feuersymbol, in einem head up display angezeigt. Das heißt, das Signal ist das rote, kreisende Blinklicht, das das Umgebungsgeräusch des Martinhorns für den Hörgeschädigten wahrnehmbar signalisiert. Der hörgeschädigte Fahrzeugführer, der das Geräusch des Martinhorns nicht hört, erkennt dann aus dieser Anzeige, dass sich ein Feuerwehrfahrzeug nähert. In dem head up display kann auch der sich verringerte Abstand des heranfahrenden Feuerwehrfahrzeuges dargestellt werden.

Gleichzeitig kann zum Beispiel die Temperatur des Lenkrades erhöht werden. Diese Temperaturzunahme nimmt der Hörgeschädigte, der das Lenkrad berührt, aufgrund von Oberflächensensibilität mit seinem Tastsinn, also taktil, wahr. Die Temperaturzunahme verbindet der Hörgeschädigte intuitiv mit Feuer. Des Weiteren kann ein Hupgeräusch eines auffahrenden Fahrzeuges über Vibrationen des Lenkrades wahrgenommen werden.

Die visuelle und/oder taktile Wahrnehmung des Umgebungsgeräusches ist insbesondere für taube Fahrzeugführer von Vorteil.

Insbesondere für Schwerhörige ist es vorteilhaft, dass gemäß einer weiteren Ausführungsform der Erfindung die erste Ausgangsschnittstelle eine Schnittstelle ist, die das Signal zur akustischen Wahrnehmung ausgibt. Damit kann der Schwerhörige Umgebungsgeräusche hören, die er innerhalb des Fahrzeuges nicht mehr akustisch wahrnehmen würde. Das Signal ist einfacherweise eine Verstärkung der Lautstärke des Umgebungsgeräusches.

Gemäß einer vorteilhaften Weiterbildung der Erfindung ist das Computerprogramm ein künstliches neuronales Netz, das trainiert ist, für die Gefahrensituation ein Signal zu erzeugen. Die Auswerteeinrichtung ist ausgeführt, das künstliche neuronale Netz mit dem wenigstens einen Umgebungsgeräusch vorwärts zu speisen.

Ein künstliches neuronales Netzwerk ist ein Algorithmus, der auf einer elektronischen Schaltung ausgeführt wird und am Vorbild des neuronalen Netzwerks des menschlichen Gehirns programmiert ist. Funktionseinheiten eines künstlichen neuronalen Netzwerks sind künstliche Neuronen, deren Output sich im Allgemeinen als Wert einer Aktivierungsfunktion ausgewertet über eine gewichtete Summe der Inputs plus einem systematischen Fehler, dem sogenannten Bias, ergibt. Durch Testen von mehreren vorbestimmten Inputs mit verschiedenen Gewichtungsfaktoren und/oder Aktivierungsfunktionen werden künstliche neuronale Netzwerke, ähnlich dem menschlichen Gehirn, trainiert. Das Trainieren eines künstlichen neuronalen Netzwerks mit Hilfe von vorbestimmten Inputs wird maschinelles Lernen genannt. Eine Teilmenge des maschinellen Lernens ist das tiefgehende Lernen, das sogenannte deep learning, bei dem eine Reihe hierarchischer Schichten von Neuronen, sogenannten hidden layers, genutzt wird, um den Prozess des maschinellen Lernens durchzuführen. Ein künstliches neuronales Netzwerk mit mehreren hidden layers ist ein deep neural network. Beispiele künstlicher neuronaler Netzwerke sind Perzeptrons, konvolutionale oder rekurrente neuronale Netzwerke. Mit Gewichtungsfaktoren werden Verbindungen zwischen Neuronen bewertet. Vorwärtsspeisen, im Englischen als forward propagation bezeichnet, bedeutet, dass eine Information in die Eingangsschicht des künstlichen neuronalen Netzwerks eingespeist wird, die folgenden Schichten durchläuft und in der Ausgabeschicht ausgegeben wird. Rückwärtsspeisen, im Englischen als backward propagation bezeichnet, bedeutet, dass eine Information in die Ausgabeschicht eingegeben wird und in der Eingangsschicht ausgegeben wird. Durch sukzessives Rückwärtsspeisen des Fehlers aus der Ausgabeschicht in die jeweils vorherige Schicht bis hin zur Eingangsschicht werden die Fehler der jeweiligen Schichten erhalten. Die Fehler sind eine Funktion der Gewichtungsfaktoren. Durch Minimierung des Fehlers in der Trainingsphase werden damit die Gewichtungsfaktoren geändert. Dadurch wird bei erneutem Einspeisen Eingabe eine Annäherung an die gewünschte Ausgabe erreicht. Die Rückwärtsspeisung ist ausführlich in Michael A. Nielsen, Neural Networks and Deep Learning, Determination Press, 2015, beschrieben.

Ein trainiertes künstliches neuronales Netz hat den Vorteil, dass es zweckgerichtet auf neue Informationen reagiert. Das trainierte künstliche neuronale Netz kennt die Bedeutung und eine damit verbundene Gefahrensituation eines Umgebungsgeräusches. Wird zum Beispiel ein Einsatzhorn als Umgebungsgeräusch erfasst, weiß das trainierte künstliche neuronale Netz, dass sich ein Rettungsfahrzeug in der Umgebung befindet.

Bevorzugt umfasst die Auswerteeinrichtung eine zweite Ausgangsschnittstelle, um das Signal an eine Fahrzeugsteuerungseinrichtung auszugeben zur wenigstens teilautomatisierten Steuerung des Fahrzeuges.

Die Fahrzeugsteuerungseinrichtung regelt die Längs- und/oder Quersteuerung des Fahrzeuges. Die teilautomatisierte Steuerung des Fahrzeuges verbessert die Unterstützung des Fahrzeugführers für eine Reaktion auf die Gefahrensituation, insbesondere dann, wenn wenig Reaktionszeit verbleibt.

In einer besonders bevorzugten Weiterbildung der Erfindung umfasst die Auswerteeinrichtung eine zweite Eingangsschnittstelle, um Daten wenigstens eines Umfelderfassungssensors zu erhalten. Die Auswerteeinrichtung ist ausgeführt ist, die Daten des wenigstens einen Umfelderfassungssensors mit dem wenigstens einen Umgebungsgeräusch hinsichtlich der Wahrnehmung der Umgebung des Fahrzeuges zu fusionieren.

Umfelderfassungssensoren sind zum Beispiel Kamera-, Lidar- und/oder Radarsensoren. Mit Umfelderfassungssensoren nehmen Fahrerassistenzsysteme die Umgebung eines Fahrzeuges wahr. Durch die Fusion des Umgebungsgeräusches mit den Daten eines Umfelderfassungssensors wird ein verbessertes Umgebungsmodell erhalten. Erhält beispielsweise die Auswerteeinrichtung über die erste Eingangsschnittstelle das Geräusch eines Martinhorns und über die zweite Eingangsschnittstelle ein Kamerabild eines heranfahrenden Feuerwehrfahrzeuges, wird das von der Auswerteeinrichtung erzeugte Signal über die erste Ausgangsschnittstelle als Bild des Feuerwehrautos mit einer Bildunterschrift ausgegeben, wobei die Bildunterschrift die Folge der Klänge des Martinhorns widergibt, zum Beispiel als ta-tü-ta-ta.

Das erfindungsgemäße Unterstützungssystem für hörgeschädigte Fahrzeugführer umfassend wenigstens ein an einem Fahrzeug anordenbares Mikrofon zur Erfassung wenigstens eines Umgebungsgeräusches. Außerdem umfasst das Unterstützungssystem eine erfindungsgemäße Auswerteeinrichtung. Ferner umfasst das Unterstützungssystem eine Benutzungseinrichtung des Fahrzeuges. Die erste Eingangsschnittstelle der Auswerteeinrichtung erhält das von dem Mikrofon erfasste Umgebungsgeräusch. Die erste Ausgangsschnittstelle der Auswerteeinrichtung gibt das Signal für die Benutzungseinrichtung aus um den Fahrzeugführer für eine Reaktion auf die Gefahrensituation zu unterstützen.

Eine Benutzungseinrichtung ist eine Armaturentafel, Mittelkonsole, Schalthebel, Lenkrad, Fahrfußhebel und/oder Windschutzscheibe.

Das Unterstützungssystem weist die Vorteile der erfindungsgemäßen Auswerteeinrichtung auf. Damit stellt die Erfindung ein Gesamtsystem bereit, um hörgeschädigte Fahrzeugführer bei einer Fahrt mit einem Fahrzeug zu unterstützen.

Vorteilhafterweise ist die Benutzungseinrichtung eine Anzeigeeinrichtung, vorzugsweise ein Infotainmentsystem und/oder ein head-up-display, eine Tasteinrichtung, vorzugsweise ein Lenkrad und/oder ein Fahrfußhebel, und/oder eine Audioeinrichtung, vorzugsweise ein Lautsprecher und/oder ein Lautsprechersystem. Dadurch umfasst das Unterstützungssystem Mittel, Umgebungsgeräusche visuell, taktil und akustisch wahrnehmbar zu machen. Taube Fahrzeugführer profitieren von der visuellen und/oder taktilen Wahrnehmung. Schwerhörige Fahrzeugführer profitieren von der akustischen Wahrnehmung.

Erfindungsgemäß ist auch eine Verwendung eines erfindungsgemäßen Unterstützungssystems in einem Fahrzeug. Damit ergeben sich in einem Fahrzeug die Vorteile des erfindungsgemäßen Unterstützungssystems.

Das erfindungsgemäße Verfahren zur Unterstützung eines hörgeschädigten Fahrzeugführers während einer Fahrt mit einem Fahrzeug umfassend die folgenden Verfahrensschritte:
- Erhalten wenigstens eines Umgebungsgeräusches aus der Umgebung des Fahrzeuges,
- Bestimmen wenigstens einer Position der Geräuschquelle relativ zu dem Fahrzeug in Abhängigkeit des Umgebungsgeräusches,
- Vorherbestimmen einer Gefahrensituation in Abhängigkeit einer Bewegung des Fahrzeuges relativ zu der Geräuschquelle,
- Erzeugen eines Signals für die Gefahrensituation,
- Ausgeben des Signals zur Wahrnehmung durch den hörgeschädigten Fahrzeugführer, um den Fahrzeugführer für eine Reaktion auf die Gefahrensituation zu unterstützen.
Dieses Verfahren hilft hörgeschädigten Fahrzeugführern, Umgebungsgeräusche wahrzunehmen und unterstützt für eine Reaktion auf eine Gefahrensituation.

Vorteilhafterweise wird eine Bewegungsrichtung der Geräuschquelle relativ zu dem Fahrzeug in Abhängigkeit des Umgebungsgeräusches bestimmt wird. Die Bewegungsrichtung kann zum Beispiel anhand einer Dopplerverschiebung der Frequenzen des Umgebungsgeräusches bestimmt werden. Die Bestimmung der Bewegungsrichtung verbessert die Reaktion auf eine Gefahrensituation. Insbesondere kann durch Kenntnis der Bewegungsrichtung einer herannahenden Geräuschquelle dieser Geräuschquelle gezielter ausgewichen werden.

Vorzugsweise wird das Signal an eine Fahrzeugsteuerungseinrichtung ausgegeben und die Fahrzeugsteuerungseinrichtung steuert das Fahrzeug wenigstens teilautomatisiert steuert. Insbesondere bei Gefahrensituationen, in denen wenig Reaktionszeit verbleibt, wird durch die teilautomatisierte Steuerung des Fahrzeuges die Unterstützung des Fahrzeugführers für eine Reaktion auf die Gefahrensituation verbessert.

Bevorzugt wird zur Durchführung des Verfahrens eine erfindungsgemäße Auswerteeinrichtung oder ein erfindungsgemäßes Unterstützungssystem verwendet.

Das erfindungsgemäße Computerprogrammprodukt zur Unterstützung eines hörgeschädigten Fahrzeugführers ist ausgeführt, in den Speicher eines Computers geladen zu werden. Das Computerprogrammprodukt umfasst Softwarecodeabschnitte, mit denen die Schritte des erfindungsgemäßen Verfahrens ausgeführt werden, wenn das Computerprogrammprodukt auf dem Computer läuft.

Computerprogrammprodukte umfassen in der Regel eine Folge von Befehlen, durch die die Hardware bei geladenem Programm veranlasst wird, ein bestimmtes Verfahren durchzuführen, das zu einem bestimmten technischen Ergebnis führt. Wenn das Programm auf einem Computer zum Einsatz kommt, ruft das Computerprogrammprodukt einen technischen Effekt hervor, nämlich die Erzeugung eines Signals in Abhängigkeit eines Umgebungsgeräusches, um das Umgebungsgeräusch mittels des Signals für hörgeschädigte Personen wahrnehmbar zu machen.

Ein Speicher ist ein Medium für die Sicherung von Daten.

Mit der Erfindung werden Umgebungsgeräusche, insbesondere relevante Verkehrsgeräusche, für hörgeschädigte Fahrzeugführer wahrnehmbar gemacht um Gefahrensituationen zu vermeiden.

Die Erfindung wird anhand der Figuren näher erläutert. Es zeigen:
Fig. 1 eine schematische Darstellung eines Fahrzeuges mit einem Ausführungsbeispiel einer erfindungsgemäßen Auswerteeinrichtung,
Fig. 2 eine schematische Darstellung eines Ausführungsbeispiels eines erfindungsgemäßen Unterstützungssystems,
Fig. 3 eine schematische Darstellung eines Ausführungsbeispiels eine erfindungsgemäßen Computerprogrammproduktes und
Fig. 4 ein schematischer Ablauf des erfindungsgemäßen Verfahrens.

In den Figuren bezeichnen gleiche Bezugszeichen gleiche oder wenigstens funktionsähnliche Bezugsteile.

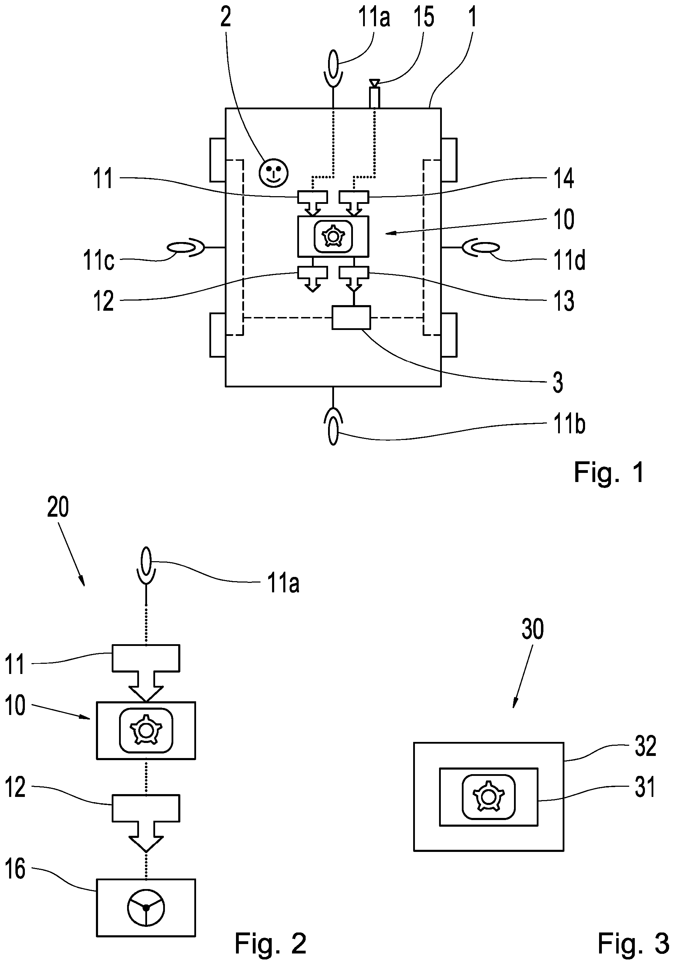

Fig. 1 zeigt ein Fahrzeug 1. Das Fahrzeug 1 ist ein Personenkraftwagen. Das Fahrzeug wird geführt von einem tauben Fahrzeugführer 2. An allen Seiten des Fahrzeuges 1 ist jeweils ein Mikrofon angeordnet. Die Mikrofone sind Richtmikrofone und für automobile Anwendungen geeignet. Insbesondere sind die Mikrofone witterungsbeständig und funktionssicher hinsichtlich funktionaler Sicherheit. Ein erstes Mikrofon 11a ist in einem vorderen Bereich des Fahrzeuges 1 angeordnet, um von vorne kommende Umgebungsgeräusche zu erfassen. Ein zweites Mikrofon 11b ist in einem hinteren Bereich des Fahrzeuges 1 angeordnet, um von hinten kommende Umgebungsgeräusche zu erfassen. Ein drittes Mikrofon 11c ist in einem Bereich linken Seitenbereich des Fahrzeuges 1 angeordnet, um von linkes kommende Umgebungsgeräusche zu erfassen. Ein viertes Mikrofon 11d ist in einem rechten Seitenbereich des Fahrzeuges 1 angeordnet, um von rechts kommende Umgebungsgeräusche zu erfassen.

Die Mikrofone 11a, 11b, 11c und 11d übertragen die erfassten Umgebungsgeräusche an eine erste Eingangsschnittstelle 11 einer Auswerteeinrichtung 10. Die erste Eingangsschnittstelle 11 ist eine Audioschnittstelle.

Die Auswerteeinrichtung 10 ist ein Prozessor, der ein Computerprogramm ausführt. Die Auswerteeinrichtung 10 kann eine zentrale Steuerplattform des Fahrzeuges 1 sein oder in eine zentrale Steuerplattform des Fahrzeuges 1 integriert sein. Das Computerprogramm hat die Architektur eines künstlichen neuronalen Netzwerks. Das künstliche neuronale Netzwerk ist trainiert, bei Eingabe eines erfassten Umgebungsgeräusches die Art der Geräuschquelle und eine mögliche Gefahrensituation, die von dieser Geräuschquelle relativ zu dem Fahrzeug 1 ausgeht, mittels eines Signals auszugeben. Über eine erste Ausgangsschnittstelle 12 wird das Signal in einer wahrnehmbaren Form für den tauben Fahrzeugführer 2 ausgegeben, zum Beispiel visuell über ein head up display.

Die Auswerteeinrichtung 10 umfasst eine zweite Eingangsschnittstelle 14. Über die zweite Eingangsschnittstelle 14 werden Daten eines Umfelderfassungssensors 15, ausgestaltet als Kamera eines Fahrerassistenzsystems, in die Auswerteeinrichtung 10 eingelesen. Das trainierte künstliche neuronale Netzwerk fusioniert das erfasste Umgebungsgeräusch mit den Bilddaten des Umfelderfassungssensors 15. Dadurch wird die visuelle Erfassung der Umgebung durch den Umfelderfassungssensor 15 mit der akustischen Erfassung der Umgebung durch die Mikrofone 11a, 11b, 11c und 11d kombiniert. Aus dieser Kombination oder Fusion resultiert eine verbesserte sensorielle Wahrnehmung der Umgebung, da nun neben visuellen auch nicht-visuelle Informationen ausgewertet werden.

Außerdem umfasst die Auswerteeinrichtung 10 eine zweite Ausgangsschnittstelle 13. Die zweite Ausgangsschnittstelle ist mit einer Fahrzeugsteuerungseinrichtung 3 verbunden. Das von der Auswerteeinrichtung 10 erzeugte Signal wird über die zweite Ausgangsschnittstelle 13 an die Fahrzeugsteuerungseinrichtung 3 weitergeleitet. Damit kann das Fahrzeug 1 von der Fahrzeugsteuerungseinrichtung 3 in Abhängigkeit des Umgebungsgeräusches gesteuert werden.

Ein Unterstützungssystem 20 ist in Fig. 1 gezeigt. Das Unterstützungssystem 20 umfasst ein erstes Mikrofon 11a, die Auswerteeinrichtung 10 mit erster Eingangsschnittstelle 11 und erster Ausgangsschnittstelle 12 und eine Benutzungseinrichtung 16. Die Benutzungseinrichtung 16 ist ein Lenkrad. Über die Benutzungseinrichtung 16 nimmt der taube Fahrzeugführer 2 mittels des Unterstützungssystems 20 ein Umgebungsgeräusch mittels seines Tastsinns wahr.

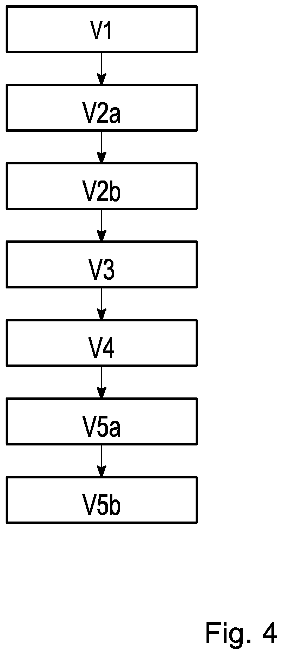

Fig. 3 zeigt ein Computerprogrammprodukt 30, das in einem Speicher 31 eines Computers 32 ausgeführt wird. Wenn das Computer 32 läuft, führt das Computerprogrammprodukt die Schritte V1 bis V5a des in Fig. 4 dargestellten Verfahrens aus. Der Computer 32 ist vorzugsweise eine zentrale Steuerplattform des Fahrzeuges, die neben akustischen Informationen auch Informationen von Umfelderfassungssensoren von Fahrerassistenzsystemen auswertet und vorzugsweise mit diesen Informationen ein künstliches neuronales Netzwerk speist.

Im ersten in Fig. 4 gezeigten Verfahrensschritt V1 wird wenigstens ein Umgebungsgeräusch aus der Umgebung des Fahrzeuges 1 erhalten, zum Beispiel mit einem der Mikrofone 11a, 11b, 11c oder 11d. In Abhängigkeit des Umgebungsgeräusches wird im Verfahrensschritt V2a eine Position der Geräuschquelle relativ zu dem Fahrzeug 1. Im Verfahrensschritt V2b wird eine Bewegungsrichtung der Geräuschquelle relativ zu dem Fahrzeug 1 in Abhängigkeit des Umgebungsgeräusches bestimmt. Ausgehend von der Position und der Bewegungsrichtung wird im Verfahrensschritt V3 eine Gefahrensituation vorherbestimmt. Abhängig von der Gefahrensituation wird ein Signal für die Gefahrensituation erzeugt im Verfahrensschritt V4. Die Schritte V2a bis V4 werden mit einem Computerprogramm, das die Auswerteeinrichtung 10 ausführt, ausgeführt. Anschließend wird im Verfahrensschritt V5a das Signal zur Wahrnehmung durch den tauben Fahrzeugführer 2 ausgegeben, um den Fahrzeugführer 2 für eine Reaktion auf die Gefahrensituation zu unterstützen. Die Ausgabe erfolgt mittels der ersten Ausgangsschnittstelle 12. Im Verfahrensschritt V5b, der zeitlich parallel zu dem Verfahrensschritt V5a erfolgen kann, wird das Signal an die Fahrzeugsteuerungseinrichtung ausgegeben. Die Fahrzeugsteuerungseinrichtung steuert das Fahrzeug 1 teilautomatisiert.

### Bezugszeichen

- 1: Fahrzeug
- 2: Fahrzeugführer
- 3: Fahrzeugsteuerungseinrichtung
- 10: Auswerteeinrichtung
- 11: erste Eingangsschnittstelle
- 11a: erstes Mikrofon
- 11b: zweites Mikrofon
- 11c: drittes Mikrofon
- 11d: viertes Mikrofon
- 12: erste Ausgangsschnittstelle
- 13: zweite Ausgangsschnittstelle
- 14: zweite Eingangsschnittstelle
- 15: Umfelderfassungssensor
- 16: Benutzungseinrichtung
- 20: Unterstützungssystem
- 30: Computerprogrammprodukt
- 31: Speicher
- 32: Computer
- V1-V5b: Verfahrensschritte

## Patentansprüche

1. Auswerteeinrichtung (10) für ein Fahrzeug (1) zur Unterstützung eines hörgeschädigten Fahrzeugführers (2) umfassend
• eine erste Eingangsschnittstelle (11), um wenigstens ein Umgebungsgeräusch zu erhalten,
• wobei die Auswerteeinrichtung (10) ausgeführt ist,
• in Abhängigkeit des Umgebungsgeräusches wenigstens eine Position der Geräuschquelle relativ zu dem Fahrzeug (1) zu bestimmen,
• in Abhängigkeit einer Bewegung des Fahrzeuges (1) relativ zu der Geräuschquelle eine Gefahrensituation vorherzubestimmen,
und
• für die Gefahrensituation ein Signal zu erzeugen,
und
• eine erste Ausgangsschnittstelle (12), die ausgeführt ist, das Signal zur Wahrnehmung durch den hörgeschädigten Fahrzeugführer (2) auszugeben, um den Fahrzeugführer (2) für eine Reaktion auf die Gefahrensituation zu unterstützen.

2. Auswerteeinrichtung (10) nach Anspruch 1, wobei die erste Eingangsschnittstelle (11) eine Schnittstelle zu wenigstens einem an dem Fahrzeug (1) anordenbaren Mikrofon (11a, 11b, 11c, 11d), vorzugsweise zu vier an dem Fahrzeug (1) anordenbaren Mikrofonen (11a, 11b, 11c, 11d), ist, wobei besonders vorzugsweise ein erstes Mikrofon (11a) in einem vorderen Bereich des Fahrzeuges (1), ein zweites Mikrofon (11b) in einem hinteren Bereich des Fahrzeuges (1), ein drittes Mikrofon (11c) in einem ersten Seitenbereich des Fahrzeuges (1) und ein viertes Mikrofon (11d) in einem zweiten Seitenbereich des Fahrzeuges (1) anordenbar ist.

3. Auswerteeinrichtung (10) nach Anspruch 1 oder 2, wobei die erste Ausgangsschnittstelle (12) eine Schnittstelle, vorzugsweise eine Benutzungsschnittstelle, ist, die das Signal zur visuellen und/oder taktilen Wahrnehmung ausgibt.

4. Auswerteeinrichtung (10) nach Anspruch 1 oder 2, wobei die erste Ausgangsschnittstelle (12) eine Schnittstelle ist, die das Signal zur akustischen Wahrnehmung ausgibt.

5. Auswerteeinrichtung (10) nach einem der vorangehenden Ansprüche, wobei das Computerprogramm ein künstliches neuronales Netz ist, das trainiert ist, für die Gefahrensituation ein Signal zu erzeugen und die Auswerteeinrichtung (10) ausgeführt ist, das künstliche neuronale Netz mit dem wenigstens einen Umgebungsgeräusch vorwärts zu speisen.

6. Auswerteeinrichtung (10) nach einem der vorangehenden Ansprüche, wobei die Auswerteeinrichtung (10) eine zweite Ausgangsschnittstelle (13) umfasst, um das Signal an eine Fahrzeugsteuerungseinrichtung (3) auszugeben zur wenigstens teilautomatisierten Steuerung des Fahrzeuges (1).

7. Auswerteeinrichtung (10) nach einem der vorangehenden Ansprüche, wobei die Auswerteeinrichtung (10) eine zweite Eingangsschnittstelle (14) umfasst, um Daten wenigstens eines Umfelderfassungssensors (15) zu erhalten und wobei die Auswerteeinrichtung (10) ausgeführt ist, die Daten des wenigstens einen Umfelderfassungssensors (15) mit dem wenigstens einen Umgebungsgeräusch hinsichtlich der Wahrnehmung der Umgebung des Fahrzeuges (1) zu fusionieren.

8. Unterstützungssystem (20) für hörgeschädigte Fahrzeugführer (2) umfassend
• wenigstens ein an einem Fahrzeug (1) anordenbares Mikrofon (11a, 11b, 11c, 11d) zur Erfassung wenigstens eines Umgebungsgeräusches,
• eine Auswerteeinrichtung nach einem der Ansprüche 1 bis 7,
und
• eine Benutzungseinrichtung (16) des Fahrzeuges (1),
• wobei die erste Eingangsschnittstelle (11) das von dem Mikrofon (11a, 11b, 11c, 11d) erfasste Umgebungsgeräusch erhält
und
• die erste Ausgangsschnittstelle (12) das Signal für die Benutzungseinrichtung (16) ausgibt,
um den Fahrzeugführer (2) für eine Reaktion auf die Gefahrensituation zu unterstützen.

9. Unterstützungssystem (20) nach Anspruch 8, wobei die Benutzungseinrichtung (16) eine Anzeigeeinrichtung, vorzugsweise ein Infotainmentsystem und/oder ein head up display, eine Tasteinrichtung, vorzugsweise ein Lenkrad und/oder ein Fahrfußhebel, und/oder eine Audioeinrichtung, vorzugsweise ein Lautsprecher und/oder ein Lautsprechersystem, ist.

10. Verwendung eines Unterstützungssystems nach Anspruch 8 oder 9 in einem Fahrzeug (1).

11. Verfahren zur Unterstützung eines hörgeschädigten Fahrzeugführers (2) während einer Fahrt mit einem Fahrzeug (1) umfassend die Verfahrensschritte:
• Erhalten wenigstens eines Umgebungsgeräusches aus der Umgebung des Fahrzeuges (1) (V1),
• Bestimmen wenigstens einer Position der Geräuschquelle relativ zu dem Fahrzeug (1) in Abhängigkeit des Umgebungsgeräusches (V2a),
• Vorherbestimmen einer Gefahrensituation in Abhängigkeit einer Bewegung des Fahrzeuges (1) relativ zu der Geräuschquelle (V3),
• Erzeugen eines Signals für die Gefahrensituation (V4),
• Ausgeben des Signals zur Wahrnehmung durch den hörgeschädigten Fahrzeugführer (2), um den Fahrzeugführer (2) für eine Reaktion auf die Gefahrensituation zu unterstützen (V5a).

12. Verfahren nach Anspruch 11, wobei eine Bewegungsrichtung der Geräuschquelle relativ zu dem Fahrzeug (1) in Abhängigkeit des Umgebungsgeräusches bestimmt wird (V2b).

13. Verfahren nach Anspruch 11 oder 12, wobei das Signal an eine Fahrzeugsteuerungseinrichtung (3) ausgegeben wird und die Fahrzeugsteuerungseinrichtung (3) das Fahrzeug (1) wenigstens teilautomatisiert steuert (V5b).

14. Verfahren nach einem der Ansprüche 11 bis 13, wobei zur Durchführung des Verfahrens eine Auswerteeinrichtung (10) nach einem der Ansprüche 1 bis 7 oder ein Unterstützungssystem (20) nach einem der Ansprüche 8 oder 9 verwendet wird.

15. Computerprogrammprodukt (30) zur Unterstützung eines hörgeschädigten Fahrzeugführers (2), das ausgeführt ist, in den Speicher (31) eines Computers (32) geladen zu werden und das Softwarecodeabschnitte umfasst, mit denen die Schritte des Verfahrens nach einem der Ansprüche 11 bis 13 ausgeführt werden, wenn das Computerprogrammprodukt (30) auf dem Computer (32) läuft.
